# EUROPÄISCHE PATENTSCHRIFT

(11) **EP 0 799 083 B1**
(45) Veröffentlichungstag und Bekanntmachung des Hinweises auf die Patenterteilung: **21.10.1998**
(21) Anmeldenummer: 95942030.8
(22) Anmeldetag: 16.12.1995
(51) Int. Cl.: B01D 21/00

(54) **VORRICHTUNG ZUR REINIGUNG VON FLÜSSIGKEITEN, INSBESONDERE VON KONTAMINIERTEM LÖSCHWASSER**
DEVICE FOR PURIFYING LIQUIDS, IN PARTICULAR POLLUTED WATER FOR FIGHTING FIRES
DISPOSITIF POUR PURIFIER DES LIQUIDES, NOTAMMENT DES EAUX POLLUEES POUR EXTINCTION D'INCENDIES

(30) Priorität: 23.12.1994 DE 4446141
(43) Veröffentlichungstag der Anmeldung: 08.10.1997
(73) Patentinhaber: ITU INGENIEURGEMEINSCHAFT TECHNISCHER UMWELTSCHUTZ GMBH, 10787 Berlin (DE)
(72) Erfinder: SIMON, Christian, D-66687 Wadern (DE); SCHANNE, Lothar, D-66333 Völklingen (DE)
(74) Vertreter: Lüke, Dierck-Wilm, Dipl.-Ing.
(86) Internationale Anmeldenummer: DE9501831
(87) Internationale Veröffentlichungsnummer: WO9620034

(56) Entgegenhaltungen:
- EP-A- 0 607 760
- EP-A- 1 475 681
- DE-U- 9 105 024
- DE-U- 9 211 275
- GB-A- 1 083 671
- NL-C- 53 917
- US-A- 3 450 632
- US-A- 3 912 533

## Beschreibung

Die Erfindung bezieht sich auf eine Vorrichtung zur Reinigung von Flüssigkeiten, insbesondere zur Reinigung von kontaminiertem Löschwasser, gemäß den Merkmalen des Oberbegriffes des Patentanspruches 1.

Bei der Bekämpfung von Bränden in geschlossenen Gebäuden, auf überdachten Freiflächen etc. werden die zur Brandbekämpfung eingesetzten Flüssigkeiten, insbesondere das Löschwasser, in hohem Maße durch beim Brand gebildete oder in sonstiger Weise freigesetzte Schadstoffe und Verunreinigungen, wie z.B. Ruß, Rauchgase und Löschmittelzusätze, verunreinigt. Damit die im Löschwasser enthaltenen Schadstoffe nicht ungehindert in die Umwelt gelangen können, muß das Löschwasser vor der Einleitung in das Abwassersystem oder dem Versickern in den Boden bzw. in das Grundwasser speziellen Aufbereitungsanlagen zugeführt werden, in denen eine Schadstoff-Dekontamination oder Schadstoffentfrachtung des Löschwassers erfolgt. In der Praxis wird das kontaminierte Löschwasser, sofern es nicht ohnehin völlig unkontrolliert abläuft, hierzu während der Löscharbeiten im Gebäude durch spezielle Rückhalteeinrichtungen, wie z.B. Rückhaltebecken, aufgefangen und erst nach Abschluß der Löscharbeiten aus diesen entnommen und den Aufbereitungseinrichtungen zugeführt. Die besondere bauliche Maßnahmen und damit erhöhte Baukosten erfordernden Rückhaltebecken sind notwendig, um überhaupt dekonterminieren zu können, da die verwendeten Aufbereitungsanlagen aufgrund ihrer Konstruktion und Betriebsweise entweder zur Brandstelle gebracht und in Betrieb genommen werden müssen, oder es sich um stationäre Anlagen ahadelt, zu denen das zurückgehaltene Wasser, z.B. mittels eines Tankwagens, transportiert werden muß. Insbesondere bei der Brandbekämpfung durch automatische Systeme zur Branderkennung, Brandmeldung und Brandbekämpfung, wie z.B. in Park- und Hochhäusern installierte Sprinkleranlagen, ist eine Reinigung des automatisch versprühten Löschwassers daher ohne die Verwendung von geeigneten Rückhalteeinrichtungen nicht möglich.

Die Aufbereitung des verunreinigten und gestauten Löschwassers erfolgt bei diesen Systemen beispielsweise dadurch, daß das Wasser aus dem Rückhaltebecken in ein Tankfahrzeug gepumpt und anschließend von diesem zu einer außerhalb gelegenen Aufbereitungsanlage transportiert wird, wo die Aufbereitung des Wassers erfolgt. Zwar können die bekannten Aufbereitungsanlagen auch fest im Gebäude installiert sein, jedoch wird von einer solchen Maßnahme in der Regel kein Gebrauch gemacht, da die Anlagen zum einen einen nicht unerheblichen Raumbedarf haben und zum anderen aufgrund ihres Antriebs durch Druck oder Elektrizität durch eine Unterbrechung der Druck-oder Elektrizitätszuleitungen im Brandfalle die Gefahr von Betriebsstörungen mit sich bringen. Ferner benötigen mit Druck oder Elektrizität betriebene Aufbereitungsanlagen zusätzliche, einen erhöhten Wartungsaufwand erfordernde Steuereinrichtungen, welche dafür sorgen, daß die Anlagen erst im Brandfalle betätigt werden.
Aus DE 92 11 275 U1 ist eine Adsorptionseinrichtung zur Abscheidung von Verunreinigungen bekannt, die aus einem transportablen, mit einem Flüssigkeitseinlaß und einem Flüssigkeitsauslaß bestehenden Behälter gebildet ist, durch welchen das kontaminierte Wasser über Pumpen durchgedrückt wird. Ferner sind eine Dekantier-, eine Filter- und Absetz- und eine Adsorptionseinrichtung aneinandergereiht (Fig.4). Auch diese Einrichtung hat die voranstehend geschilderten Nachteile.

Der Erfindung liegt die Aufgabe zugrunde, eine verbesserte Vorrichtung zur Reinigung von Flüssigkeiten,insbesondere von kontaminiertem Löschwasser, zu schaffen.

Die Lösung dieser Aufgabe ergibt sich aus den kennzeichnenden Merkmalen des Anspruches 1. Die erfindungsgemäße Vorrichtung befindet sich stationär vor Ort, kann mit wenigen Handgriffen in Betrieb genommen werden, nimmt eine in weiten Grenzen automatische Anpassung der Flüssigkeits-Durchsatzleistung an Schwankungen des zu reinigenden Flüssigkeitsstromes selbständig vor und besitzt darüber hinaus einen einfachen Aufbau, ist kostengünstig herzustellen, weist einen hohen Reinigungs-Wirkungsgrad auf und erfordert nur einen geringen Wartungsaufwand.

Die erfindungsgemäße Vorrichtung wird vorzugsweise zur Reinigung von kontaminiertem Löschwasser eingesetzt, das beim Löschen eines Brandes entsteht. Sie ist jedoch nicht auf eine derartige Verwendung allein beschränkt und eignet sich ebenfalls zur Reinigung beliebiger anderer Flüssigkeiten wie z.B. Alkohole, Kraftstoffe, Regenwasser etc. Aus Gründen der besseren Verständlichkeit beziehen sich die nachfolgenden Ausführungen jedoch konkret auf die Verwendung der Vorrichtung als Aufbereitungsanlage zur Reinigung (Dekontamination) von Löschwasser.

Die erfindungsgemäße Vorrichtung wird vorzugsweise zur Reinigung von kontaminierten Flüssigkeiten, insbesondere von kontaminiertem Löschwasser, eingesetzt und erlaubt eine automatische Anpassung der Reinigungsleistung an den anfallenden, zu reinigenden Flüssigkeitsstrom und ermöglicht darüberhinaus eine kostengünstige und wirksame Reinigung der Flüssigkeit.

Die erfindungsgemäße Vorrichtung weist insbesondere die im Folgenden aufgeführten Vorteile auf:

Für den Betrieb der Vorrichtung werden keine externen Kraftquellen, wie z.B. Elektrizität, Druck etc. benötigt, da die Vorrichtung ohne eigene Antriebsquelle auskommt. Die Vorrichtung arbeitet in Abhängigikeit von der anfallenden Löschwassermenge kontinuierlich und paßt sich automatisch an den anfallenden Löschwasserstrom an. Daher ist ein Auffangen des Löschwassers in besonderen Rückhaltebecken bei den Löscharbeiten nicht erforderlich. Die Vorrichtung gestattet gleichzeitig ein Auffangen und Aufbereiten des kontaminierten Löschwassers und darüberhinaus ein kontrolliertes Ableiten des gereinigten Löschwassers. Die in der Vorrichtung verwendeten Filter und Filtermaterialien sind nicht auf eine spezielle Art oder einen speziellen Filter beschränkt und können individuell an die Art der zu reinigenden Flüssigkeit sowie die darin enthaltenen Schadstoffe angepaßt werden So sind z. B. als einsetzbare Filter Beutel-, Schlauch-oder Plattenfilter bzw. als Filtermaterialien Metall (z.B. Edelstahl), synthetische Fasern (z.B. Nylon, Polester und Polypropylen) sowie Keramik oder andere geeignete Materialien verwendbar. Nach einem Brandfall sind die verbrauchten, mit Verunreinigungen beladenen Filtermaterialien und oberflächenaktiven Substanzen leicht und ohne Umweltbelastung aus der Vorrichtung zu entnehmen. Zum Betrieb der Vorrichtung können zum Teil Filtermaterialien und oberflächenaktive Stoffe eingesetzt werden, die nach einer Regenerierung wieder verwendet werden können. Nach einem Brandfall können die Vorrichtungskomponenten sehr schnell und kostengünstig wieder in ihren aktiven Zustand überführt werden. Die Vorrichtungskomponenten, mit Ausnahme der eingebauten Filtermaterialien und oberflächenaktiven Substanzen, die nach jedem Brandfall ausgetauscht werden, können auch nach dem Brandfall an ihrem Ort verbleiben und sind nahezu unbegrenzt oft einsetzbar. Die Vorrichtung ist mit geringem Aufwand zu warten und zu betreiben,besitzt eine sehr hohe Betriebssicherheit und arbeitet im Brandfall völlig selbsttätig. Der Platzbedarf der Vorrichtung ist gegenüber dem Bau eines speziellen Löschwasserrückhaltebeckens vergleichsweise gering. Die Vorrichtung erfordert im Vergleich zu anderen Systemen in der Regel einen geringeren Investitionsbedarf. Die Vorrichtung erlaubt eine einfache und kostengünstige Nachrüstung von bestehenden, insbesondere nicht-unterkellerten (Alt-)Bauten, die eine Umnutzung erfahren. Die erfindungsgemäße Vorrichtung wird bevorzugt als ortsfest installierte Anlage in mit einem automatisch arbeitenden Brandbekämpfungssystem ausgerüsteten Gebäuden, wie z.B. Parkhäusern, Hochhäusern, Lagerhallen, etc. eingesetzt.

Die Erfindung ist nachfolgend anhand einer in den Zeichnungen näher dargestellten Ausführungsform einer Vorrichtung als Aufbereitungsanlage zur Reinigung (Dekontamination) von Löschwasser näher erläutert.
Es zeigen:
- Fig. 1: einen vertikalen Längsschnitt,

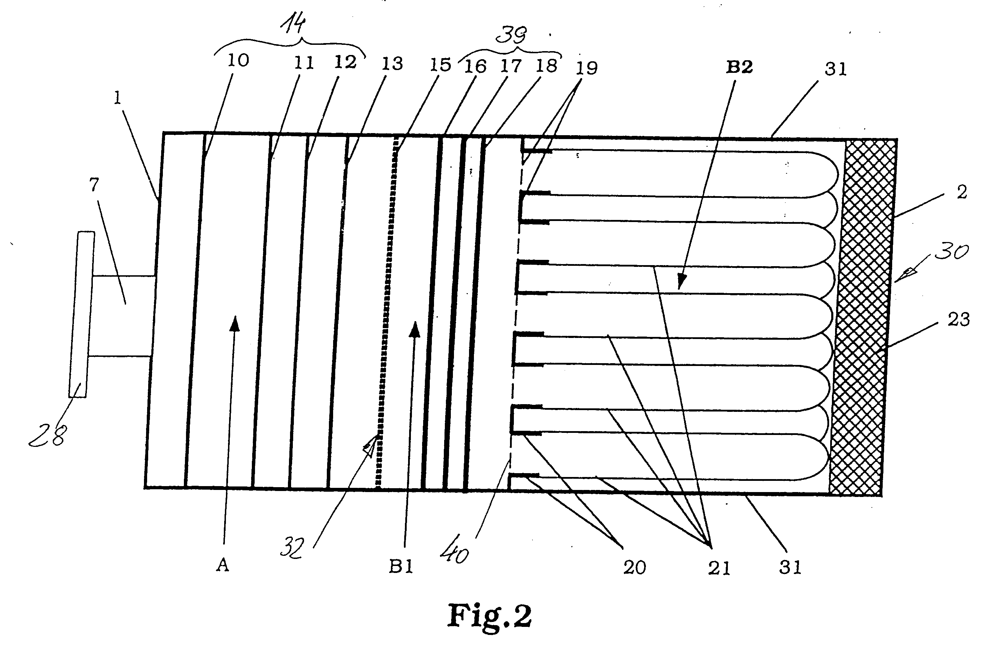

- Fig. 2: einen horizontalen Längsschnitt gemäß der Linie II-II in Fig. 1 und
- Fig. 3: einen vertikalen Querschnitt gemäß der Linie III-III in Fig. 1.

Die Vorrichtung besteht aus einem durch eine Frontwand 1, eine Rückwand 2, einen Behälterboden 3, einen oder mehrere Behälterdeckel 5, sowie zwei Seitenwände 31 gebildeten, nach außen hin flüssigkeitsdichten Behälter 30, in dessen Innenraum eine zwischen den Seitenwänden 31 von der Frontwand 1 zur Rückwand 2 verlaufende Zwischenbodenplatte 9, eine sich von der Zwischenbodenplatte 9 aus in Richtung zur Behälteroberseite 5 hin erstreckende erste Trennwand 13 und eine zwischen der ersten Trennwand 13 und der Rückwand 2 gebildete, sich von der Zwischenbodenplatte 9 aus zur Behälteroberseite 4 in erstreckende zweite Trennwand 19 angeordnet sind.

Der quaderförmige Behälter 30 hat eine Länge, die in etwa dem Doppelten der Höhe und/oder der Breite entspricht. Beispielsweise betragen die Länge ca. 2.200 mm, die Breite ca. 1.050 mm und die Höhe ca. 1.000 mm. Der Behälter 30 kann jedoch auch die Form einer Röhre besitzen, wobei die im Behälter enthaltenen Sieb- und Filterelemente 32 bzw. 9 entsprechend an die runde Bauform angepaßt wären.

In der Mitte der Frontplatte 1 sind oberhalb der Zwischenbodenplatte 9 ein Flüssigkeitseinlaß 7 und unterhalb der Zwischenbodenplatte 9 ein Flüssigkeitsauslaß 8 gebildet. Diese können jedoch auch in den Seitenwänden 31, dem Behälterboden 3 oder an der Behälteroberseite 4 angeordnet sein. Der Flüssigkeitseinlaß 7 ist wenige Zentimeter unterhalb der Behälteroberseite 4 angeordnet. Die Unterkante 29 des Flüssigkeitsauslasses 8 schließt bündig mit dem Behälterboden 3 ab.

Der Flüssigkeitseinlaß 7 und der Flüssigkeitsauslaß 8 sind mit Flanschen 28 versehen, an denen mechanisch, elektrisch oder pneumatisch betätigbare, in den Zeichnungen nicht dargestellte Absperrschieber angebracht sein können.

In dem durch die Frontwand 1, die beiden Seitenwände 31, die Zwischenbodenplatte 9 und die erste Trennwand 13 begrenzten Abschnitt A des Behälters 30 sind Abscheideelemente 14 in Form einer sich von der Zwischenbodenplatte 9 aus nach oben hin erstreckenden Feststoffwand 11 und einer sich von oben her in Richtung auf die Zwischenbodenplatte 9 zu erstreckenden Schwimmstoffwand 12 gebildet. Die Feststoffwand 11 dient zur Abscheidung von in der Flüssigkeit enthaltenden Feststoffen und erstreckt sich bis in Höhe der Unterkante 35 des Flüssigkeitseinlasses 7.Die Schwimmstoffwand 12 dient zur Abscheidung von in der Flüssigkeit enthaltenen, an der Oberfläche treibenden Schwimmstoffen, erstreckt sich bis unterhalb der Unterkante 35 des Flüssigkeitseinlasses 7 und ist zwischen der Feststoffwand 11 und der ersten Trennwand 13 angeordnet. Im Abschnitt A erfolgt somit eine Abscheidung der in der Flüssigkeit enthaltenen Schwimm- und Grobstoffe.

Im Abschnitt A ist ferner in Fließrichtung gesehen hinter dem Flüssigkeitseinlaß 7 eine sich bis unterhalb der Feststoffwand 11 erstreckende Prallwand 10 angeordnet, die ein ungehindertes Einströmen oder Einschießen der Flüssigkeit durch den Flüssigkeitseinlaß 7 in den Abschnitt A des Behälters 30 verhindert. Die Prallwand 10 und die Feststoffwand 11 sind gegenüber der Frontwand 1 bzw. der Vertikalen in einem Winkel zwischen 0° und 45°, vorzugsweise 10°, geneigt angeordnet.

In dem durch die erste Trennwand 13, die zweite Trennwand 10, die Zwischenbodenplatte 9 und die beiden Seitenwände 1 begrenzten Abschnitt B1 des Behälters 30 sind Sieb- und Filterelemente 32 bzw. 39 zur Feinfilterung der Flüssigkeit vorgesehen. Am stromaufwärtigen Ende des Abschnitts B1, nahe der ersten Trennwand 13, ist als Siebelement 32 eine Siebwand 15 angeordnet, die z.B. durch ein feinmaschiges Gitter oder Siebblech gebildet wird. Die Maschenweite der Siebwand 15 liegt vorzugsweise im Bereich zwischen 0,5 bis 5 mm. Stromabwärts der Siebwand 15 sind drei, Filterelemente 39 bildende Plattenfilter 16,17,18 im Abstand von einigen Zentimetern voneinander angeordnet. Die Nennporenweite der Plattenfilter 16,17,18 liegt im Bereich zwischen 100 bis 1.500 um und kann in Strömungsrichtung der Flüssigkeit gesehen abnehmen. Die Plattenfilter 16,17, 18 und die Siebwand 15 sind gegenüber der Vertikalen in einem Winkel zwischen 0° und 45°, vorzugsweise 8°, geneigt angeordnet und werden von der Flüssigkeit von unten nach oben durchströmt. Die im Abschnitt B1 enthaltenen Sieb- und Filterelemente 32 bzw. 39 in Form der Siebwand 15 bzw. der Plattenfilter 16 bis 18 dienen der Feinfiltration der zu reinigenden Flüssigkeit.

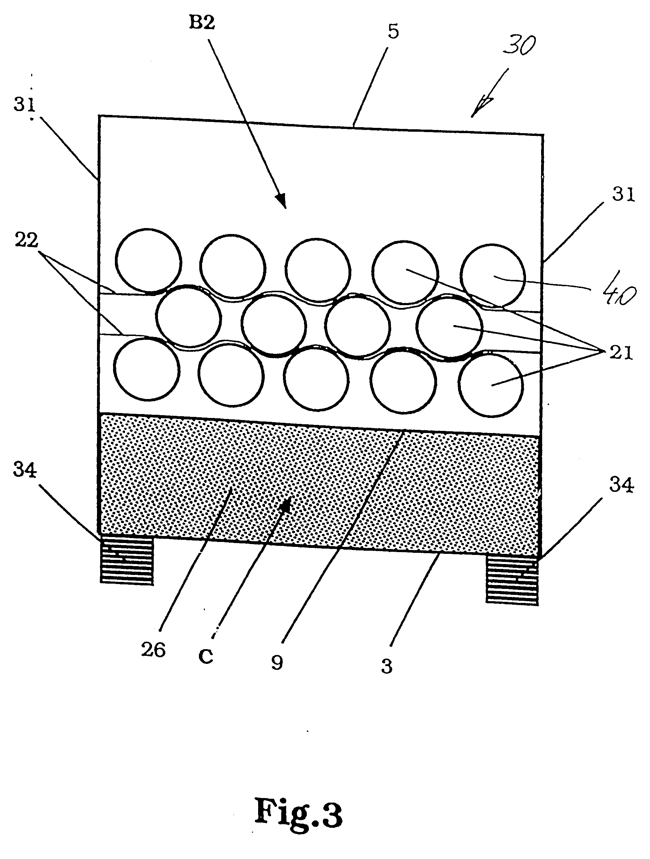

Die stromabwärts der Filterelemente 39 gelegene, den Abschnitt B1 begrenzende zweite Trennwand 19 weist mehrere Öffnungen 40 auf, in die Rohrstutzen 20 eingesetzt sind, die strömungsmäßig mit als Filterelemente 21 dienenden Beutelfiltern 41 zur Feinstfilterung der zu reinigenden Flüssigkeit verbunden sind. Die Beutelfilter 41 sind in dem durch die zweite Trennwand 19, die Rückwand 2, die beiden Seitenwände 31 und die Zwischenbodenplatte 9 begrenzten Abschnitt B2 des Behälters 30 übereinanderliegend in Reihen angeordnet. Wie es in Fig. 3 dargestellt ist, sind drei Reihen mit insgesamt 14 Beutelfiltern 41 vorgesehen, die durch gewellte Trennbleche 22 voneinander getrennt sind, so daß die Beutelfilter 41 in definierten, übereinanderliegenden Ebenen zueinander angeordnet sind.Die Trennbleche 22 verlaufen parallel zur Zwischenbodenplatte 9. Anstelle der verwendeten Beutelfilter 41 können die Filterelemente 21 im Abschnitt B2 auch als Plattenfilter etc. mit einer entsprechenden Nennporenweite ausgebildet sein. Um eine Filtration über die gesamte Höhe des im Abschnitt B2 zur Verfügung stehenden Raumes zu erhalten, sind die Rohrstutzen 20 und die diesen zugeordneten Beutelfilter 41 in der Weise angeordnet, daß die Unterseiten der höher gelegenen Rohrstutzen 20 und Beutelfilter 41 tiefer liegen als die Oberseiten der darunter angeordneten Rohrstutzen 20 und Beutelfilter 41, wie es in Fig. 3 dargestellt ist. Die Beutelfilter 41 bestehen aus mehreren Lagen von Filtermaterial. Die Nennporenweite des Filtermaterials der Beutelfilter 41 liegt z.B. im Bereich zwischen 1 und 100 um und nimmt von Filterlage zu Filterlage in Strömungsrichtung der Flüssigkeit gesehen ab. Die Nennporenweite ist geringer als die Nennporenweite der im Abschnitt B1 angeordneten Plattenfilter 16,17,18. Die Rohrstutzen 20 erstrecken sich zum Teil, z.B. 5 cm, in den Abschnitt C hinein, so daß die Beutelfilter 41 mit ihrem offenen Ende auf die Rohrstutzen 20 aufgezogen und in einfacher Weise mittels nicht dargestellter Schlauch- oder Rohrschellen an den Rohrstutzen 20 befestigt werden können. Die Trennbleche 22 und Beutelfilter 41 erstrecken sich nicht vollständig bis an die Rückwand 2 des Behälters 30 heran, sodaß zwischen der Rückwand 2 und den Enden der Trennbleche 22 und der Beutelfilter 41 ein Zwischenraum von z.B. 15 cm verbleibt. Die Öffnungen 40 der Rohrstutzen 20 und die Beutelfilter 41 sind unterhalb der Unterkante 35 des Flüssigkeitseinlasses 7 angeordnet. Ferner erstreckt sich der von den Plattenfiltern 16,17,18 des Abschnitts B1 und den Beutelfiltern 41 des Abschnitts B2 ausgefüllte filteraktive Raum in vertikaler Richtung im wesentlichen von der Zwischenbodenplatte 9 aus bis in Höhe der Oberkante 33 der ersten Trennwand 13.

Am unteren Ende des zwischen den Enden der Trennbleche 22 und der Beutelfilter 41 gebildeten Zwischenraumes ist eine Durchtrittsöffnung 23 für die Flüssigkeit angeordnet, durch welche die Flüssigkeit aus dem Abschnitt B2 in den unterhalb der Zwischenbodenplatte 9 gelegenen Abschnitt C einströmen kann. Die Durchtrittsöffnung 23 für die Flüssigkeit wird entweder durch eine Ausnehmung in der Zwischenbodenplatte 9 oder dadurch gebildet, daß die Zwischenbodenplatte 9 nicht vollständig bis an die Rückwand 2 heranreicht. Die Durchtrittsöffnung 23 für die Flüssigkeit kann auch an einer anderen als an der vorgenannten Stelle z.B. unterhalb der Beutelfilter 41 oder in der Nähe der zweiten Trennwand 19, angeordnet sein.

In den Abschnitten A,B1 und B2 findet eine mechanische und physikalische Trennung der in der Flüssigkeit enthaltenen Schwimm- und Feststoffe statt.

Der Abschnitt C ist mit einem feinkörnigen oberflächenaktiven Adsorptions-Filtermaterial 26, z.B. Aktivkohle, Zeolithe und/oder makroporösen Polymeren (Molekularsiebe) ausgefüllt, an denen eine Adsorption der in der Flüssigkeit gelösten Schadstoffe erfolgt.

Der Abschnitt C kann auch Absorptions-Materialien, wie z.B. Kieselgel, enthalten, welche die in der Flüssigkeit gelösten Schadstoffe absorbieren. Ferner ist es möglich, den Abschnitt C mit geeigneten chemischen Reagenzien, wie z.B. Fällungsmitteln, zu füllen, durch die in der kontaminierten Flüssigkeit gelöste Schadstoffe durch chemische Reaktion umgewandelt werden.

Die oberflächenaktiven Adsorptions- und/oder Absorptions-Materialien und/oder chemischen Reagenzien können im Abschnitt C entweder einzeln oder in Kombination miteinander, z.B. als Gemisch, eingesetzt werden, wobei die Materialien den gesamten Raum des Abschnitts C oder nur einen Teil desselben ausfüllen.

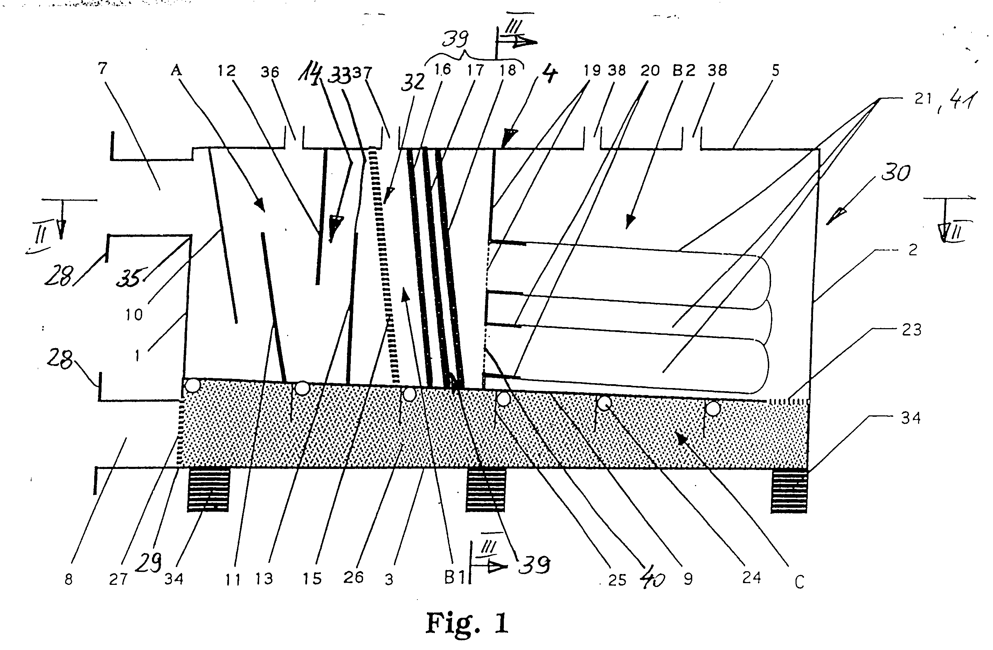

Die zu reinigende Flüssigkeit durchströmt den Abschnitt C entlang seiner gesamten Länge von der Rückwand 2 bis zur Frontwand 1 und tritt danach aus dem im Bereich der Frontwand 1 angeordneten Flüssigkeitsauslaß 8 aus. Damit das Filtermaterial 26, das in Fig. 1 als punktierte Fläche dargestellt ist, nicht aus dem Abschnitt C herausgespült wird, sind die Öffnungen des Flüssigkeitsauslasses 8 sowie der Durchtrittsöffnung 23 für die Flüssigkeit mit einem feinmaschigen Lochblech 27 mit einer geeigneten Maschenweite von z.B. 0,1 bis 5 mm abgedeckt.

Sofern in der zu reinigenden Flüssigkeit verschiedene unterschiedliche Schadstoffe gelöst sind, die sich nicht mittels eines einzigen Filtermaterials 26 adsorbieren lassen, können im Abschnitt C auch mehrere unterschiedliche Filtermaterialien 26 enthalten sein, die vorzugsweise in Strömungsrichtung der Flüssigkeit gesehen hintereinander angeordnet sind und von der Flüssigkeit nacheinander durchströmt werden. Weiterhin sind im Abschnitt C sich von der Zwischenbodenplatte 9 aus nach unten in Richtung zum Behälterboden 3 hin erstreckende, in horizontaler Richtung im Abstand zueinander angeordnete Stegbleche 25 vorgesehen, die von der Flüssigkeit unterströmt werden müssen. In dem zur Rückwand 2 hin offenen Winkel zwischen den Stegblechen 25 und der Zwischenbodenplatte 9 sind in einem Abstand von je ca. 20 mm Entlüftungsrohre 24 angebracht, z.B. als perforierte Rohre oder Schläuche, die der Entlüftung des Abschnitts C dienen. Diese verlaufen im wesentlichen horizontal und reichen von einer der Seitenwände 31, durch die diese seitlich herausgeführt sind, bis ca. 50 mm an die gegenüberliegende Seitenwand 31 heran. Die Durchführung durch die Seitenwand 31 erfolgt in flüssigkeitsdichter Form. Im Abschnitt C befindliche Luft kann über die in dieser Weise quer zur Fließrichtung eingebauten Entlüftungsrohre 24 kontrolliert aus dem Behälter 30 entweichen.

Die Behälteroberseite 4 ist mit einem oder mehreren Behälterdeckeln 5 verschließbar, die über jedem der Abschnitte A, B1 und B2 angeordnet sind. Der oder die Behälterdeckel 5 ist bzw. sind, wie in Fig. 1 gezeigt, mit Entflüftungsrohren 36,37,38 zur Entlüftung der Abschnitte A, B1, B2 versehen.

Die im Innenraum des Behälters 30 angeordneten Sieb- und Filterelemente 32 bzw. 39 in Form der Siebwand 15 bzw. der Plattenfilter 16 bis 18, die erste und zweite Trennwand 13 bzw. 19, die Prallwand 10, die Feststoffwand 11, die Schwimmstoffwand 12 und die Trennbleche 22 sowie die Zwischenbodenplatte 9 erstrecken sich von einer Seitenwand 31 des Behälters 30 bis zur anderen Seitenwand 31 und schließen mit den Seitenwänden 31 flüssigkeitsdicht ab. Die Zwischenbodenplatte 9 ist im Bereich der Frontwand 1 in einer Höhe von ca. 300 mm über dem Behälterboden 3 angeordnet und weist in Richtung auf die Rückwand 2 zu ein Gefälle von ca. 5% auf. Die Neigung der Zwischenbodenplatte 9 ist zwischen 0° und 30 ° einstellbar.

Der Behälter 30 und die darin enthaltenen Wände sind aus korrosionsbeständigen Materialien, wie z.B. Edelstahl oder Kunststoff gebildet.

Die Sieb- und Filterelemente 32 bzw. 39 in Form der Siebwand 15 bzw. der Plattenfilter 16 bis 18, die Beutelfilter 41 und das Filtermaterial 26, die erste und zweite Trennwand 13 bzw. 19, die Abscheideelemente 14 in Form der Prallwand 10, der Feststoffwand 11 und der Schwimmstoffwand 12 und die Trennbleche 22 sowie die Zwischenbodenplatte 9 sind durch an der Frontwand 1, der Rückwand 2 und den Seitenwänden 31 des Behälters 30 angeordnete, in den Zeichnungen nicht dargestellte Montage-, Stütz- und Führungselemente in der Weise gehalten, daß diese bei geöffnetem Behälterdeckel 5 nach oben hin aus dem Behälter 30 herausnehmbar sind. Ferner sind am Behälterboden 3 höhenverstellbare Montagefüße 34 vorgesehen, durch welche die Neigung des Behälters 30 an Bodenunebenheiten anpaßbar ist. An der Front- und Rückwand 1 bzw. 2 sowie den Seitenwänden 31 können in den Zeichnungen nicht dargestellte Anhängehaken vorgesehen sein.

Die Vorrichtung ist in der Weise ausgebildet, daß zugeführte Flüssigkeit selbständig aufgrund der Schwerkraft vom Flüssigkeitseinlaß 7 durch den Behälter 30 hindurch zum Flüssigkeitsauslaß 8 fließt. Die Flüssigkeit kann auch mit Hilfe von Pumpen durch den Behälter 30 hindurchgepumpt werden. Der Flüssigkeitsdurchsatz durch den Behälter 30 ist in weiten Grenzen z.B. mittels Absperrschiebern, variabel und liegt z.B. im Bereich von 100 m³/h.

### Funktionsweise:

Die Flüssigkeit, z.B. in einem Brandfall anfallendes Löschwasser, gelangt über den Flüssigkeitseinlaß 7 zuerst in den Abschnitt A, in dem eine Schwimm- und Grobstoffabscheidung von in der Flüssigkeit enthaltenden Schadstoffen erfolgt. Im Abschnitt A befindliche Luft kann über die Entlüftungsrohre 36 bis 38 im Behälterdeckel 5 kontrolliert nach oben entweichen.

Das durch den Abschnitt A fließende Wasser ist gezwungen, unter der quer zur Fließrichtung angeordneten Prallwand 10 hindurch, über die ebenfalls quer zur Fließrichtung angeordnete Feststoffwand 11 hinweg, danach wieder unter der Schwimmstoffwand 12 hindurch und über die erste Trennwand 13 hinweg zu strömen. Die Prallwande 10, die Feststoffwand 11, die Schwimmstoffwand 12 und die erste Trennwand 13 sind hinsichtlich Länge, Neigung etc. so angeordnet und ausgeführt, daß schwere Feststoffe (Grobstoffe) sich am Boden des Abschnitts A im Bereich vor der Feststoffwand 11 absetzen und somit abgeschieden werden können. Feste Schwimmstoffe gelangen nach Passage der Prallwand 10 in den Schwimmstoffbereich, welcher sich im oberen Teil des Behälters 30 zwischen der Prallwand 10 und der ersten Trennwand 13 befindet. Sie werden hier durch die Schwimmstoffwand 12 zurückgehalten, die von der Behälteroberseite 4 bzw. vom Behälterdeckel 5 bis deutlich unterhalb des sich beim Betrieb der Vorrichtung im Abschnitt A einstellenden Flüssigkeitsspiegels reicht. Bis dahin noch nicht abgeschiedene, schwere Festestoffe können bei der weiteren Passage am Boden des zweiten Festoff-/Grobstoffbereichs abgeschieden werden, der sich zwischen der ersten Trennwand 13 und der Feststoffwand 11 befindet. Zwischen der Schwimmstoffwand 12 und der ersten Trennwand 13 hindurch gelangt die weitgehend von Schwimmstoffen und Grobstoffen gereinigte Flüssigkeit in den Abschnitt B1.

Die Einlaufhöhe des Abschnitts B1 entspricht im wesentlichen der Einlaufhöhe am Flüssigkeitseinlaß 7. Bei der Passage von Abschnitt B1 durchströmt das Löschwasser jeweils von unten nach oben zuerst die Siebwand 15, danach die drei Plattenfilter 16,17,18, die in der Reihenfolge mit vorzugsweise abnehmender Nennporenweite (Kalibrierung ca. 100 bis 1.500 um) in Fließrichtung angeordnet sind. An den Plattenfiltern 16,17,18 werden Partikel entsprechender Feinheit abgeschieden. Im Abschnitt B1 befindliche Luft kann über die Entlüftungsrohre 37 im Behälterdeckel 5 kontrolliert nach oben entweichen.

Durch die horizontal in der vertikalen zweiten Trennwand 19 angebrachten Rohrstutzen 20 gelangt das Löschwasser nun in den Abschnitt B2, in dem eine Feinstfiltration der Flüssigkeit erfolgt. Im Abschnitt B2 befindliche Luft kann über die Entlüftungsrohre 38 im Behälterdeckel 5 kontrolliert nach oben entweichen. Die Flüssigkeit strömt durch die an den Rohrstutzen 20 angebrachten Beutelfilter 41 und fließt über die Zwischenbodenplatte 9 bzw. die zwischen den Reihen von Beutelfiltern 41 angebrachten wellblechartigen Trennbleche 22 weiter. Mittels der Beutelfilter 41 wird die Flüssigkeit weitestgehend von Feinst-Partikeln und den an diesen gebundenen Schadstoffen befreit. Nach der Passage des horizontal entlang der Rückwand 2 angeordneten feinmaschigen Gitters, das in den Zeichnungen nicht dargestellt ist, gelangt das durch mechanischphysikalische Verfahren aufbereitete Löschwasser durch die Durchtrittsöffnung 23 in den am Behälterboden 3 angeordneten Abschnitt C.

Die durch ein in der Durchtrittsöffnung 23 angeordnetes Gitter 27 einströmende Flüssigkeit muß den Abschnitt C und damit das hierin befindliche Filtermaterial 26 durchströmen. Dabei ist die Flüssigkeit gezwungen, die in variierbaren Abstand von z.B. 350 mm quer zur Fließrichtung angeordneten, bis auf eine Höhe von ca. 150 mm an den Behälterboden 3 heranreichenden Stegbleche 25 zu unterströmen. Im Abschnitt C befindliche Luft kann über die quer zur Fließrichtung eingebauten Entlüftungsrohre 24 kontrolliert aus dem Behälter 30 entweichen. Nach dem Durchströmen des Abschnitts C tritt die Flüssigkeit in gereinigter Form aus dem Flüssigkeitsauslaß 8 aus.

Das in der Vorrichtung durchgeführte Verfahren besteht darin, in einem ersten Verfahrensschritt die in der Flüssigkeit enthaltenen Feststoffe nach ihrer relativen Dichte abzuscheiden, in einem zweiten Verfahrensschritt eine Abscheidung der in der Flüssigkeit enthaltenen Feststoffe nach ihrer Form und/oder Größe und letztlich in einem dritten Verfahrensschritt eine Abscheidung von in der Flüssigkeit gelösten Stoffen durch Adsorption, Absorption und/oder chemische Umwandlung der Stoffe vorzunehmen. Bei diesem Verfahren erfolgt die Reinigung der Flüssigkeit daher aufgrund einer Kombination von physikalischer und chemischer Abscheidung der Schadstoffe.

### BEZUGSZEICHENLISTE

- 1: Frontwand
- 2: Rückwand
- 3: Behälterboden
- 4: Behälteroberseite
- 5: Behälterdeckel
- 7: Flüsssigkeitseinlaß
- 8: Flüssigkeitsauslaß
- 9: Zwischenbodenplatte
- 10: Prallwand
- 11: Feststoffwand
- 12: Schwimmstoffwand
- 13: Trennwand (erste)
- 14: Abscheideelement (10-12)
- 15: Siebwand
- 16-18: Plattenfilter
- 19: Trennwand (zweite)
- 20: Rohrstutzen
- 21: Filterelement
- 22: Trennblech
- 23: Durchtrittsöffnung
- 24: Entlüftungsrohr
- 25: Stegblech
- 26: Filtermaterial
- 27: Lochblech
- 28: Flansch
- 29: Unterkante
- 30: Behälter
- 31: Seitenwand
- 32: Siebelement
- 33: Oberkante
- 34: Montagefuß
- 35: Oberkante
- 36: Entlüftungsrohr
- 37: Entlüftungsrohr
- 38: Entlüftungsrohr
- 39: Filterelement
- 40: Öffnung
- 41: Beutelfilter

## Patentansprüche

1. Vorrichtung zur Reinigung von Flüssigkeiten, insbesondere zur Reinigung von kontaminiertem Löschwasser, aus einem Behälter (30) mit einer Frontwand (1), einer Rückwand (2), einem Behälterboden (3), zwei Seitenwänden (31), einem Flüssigkeitseinlaß (7) und einem Flüssigkeitsauslaß (8),
**gekennzeichnet durch**
- eine sich im Innern des Behälters (30) von der Frontwand (1) bis zur Rückwand (2) erstreckende Zwischenbodenplatte (9),
- eine sich von der Zwischenbodenplatte (9) aus in Richtung zur Behälteroberseite (4) hin erstreckende erste Trennwand (13),
- eine zwischen der ersten Trennwand (13) und der Rückwand (2) gebildete, sich von der Zwischenbodenplatte (9) aus zur Behälteroberseite (4) hin erstreckende zweite Trennwand (19),
- einen durch die erste Trennwand (13), die Frontwand (1), die beiden Seitenwände (31) und die Zwischenbodenplatte (9) begrenzten Abschnitt (A), der Abscheideelemente (14) zur Abscheidung von Schwimm- und/oder Grobstoffen aus der Flüssigkeit enthält,
- einen durch die erste Trennwand (13), die zweite Trennwand (19), die beiden Seitenwände (31) und die Zwischenbodenplatte (9) begrenzten Abschnitt (B1), in dem Sieb- und Filterelemente (32 bzw. 39) zur Feinabscheidung von in der Flüssigkeit enthaltenen Feststoffen angeordnet sind,
- einen durch die Trennwand (19), die Seitenwände (31), die Zwischenbodenplatte (9) und die Rückwand (2) begrenzten Abschnitt (B2), in dem Filterelemente (21) zur Feinstabscheidung von in der Flüssigkeit enthaltenen Feststoffen angeordnet sind,
- einen durch die Zwischenbodenplatte (9), den Behälterboden (4), die Seitenwände (31) und die Front- und und Rückwand (1, 2) begrenzten Abschnitt (C), in dem Filtermaterial (26) zur Absorption von in der Flüssigkeit gelösten Schadstoffen angeordnet ist,
- und eine in der Zwischenbodenplatte (9) zwischen dem Abschnitt (B2) und dem Abschnitt (C) gebildete Durchtrittsöffnung (23) für die Flüssigkeit,
- wobei der Flüssigkeitseinlaß (7) mit dem Abschnitt (A) und der Flüssigkeitsauslaß (8) mit dem Abschnitt (C) strömungsmäßig verbunden sind.

2. Vorrichtung nach Anspruch 1, dadurch gekennzeichnet, daß die Oberkante (33) der ersten Trennwand (13) im wesentlichen auf gleicher Höhe mit der Unterkante (35) des Flüssigkeitseinlasses (7) liegt.

3. Vorrichtung nach Anspruch 1 oder 2, dadurch gekennzeichnet, daß die im Abschnitt (A) angeordneten Abscheideelemente (14) durch eine dem Flüssigkeitseinlaß (7) gegenüberliegende Prallwand (10), die sich bis unterhalb des sich im Betrieb der Vorichtung einstellenden Flüssigkeitsstandes im Abschnitt (A) erstreckt, eine sich von der Zwischenbodenplatte (9) aus bis in Höhe der Unterkante (35) des Flüssigkeitseinlasses (7) erstreckende Feststoffwand (11) zur Abscheidung von in der Flüssigkeit enthaltenene Feststoffen und eine sich von der Behälteroberseite (4) her in Richtung zum Behälterboden (3) hin erstreckende Schwimmstoffwand (12) zur Abscheidung von in der Flüssigkeit enthaltenen Schwimmstoffen gebildet sind, wobei die zwischen der Feststoffwand (11) und der ersten Trennwand (13) angeordnete Schwimmstoffwand (12) sich bis unterhalb des Flüssigkeitsspiegels erstreckt, der sich beim Betrieb der Vorrichtung im Abschnitt (A) einstellt.

4. Vorrichtung nach Anspruch 1 oder 2, dadurch gekennzeichnet, daß die im Abschnitt (B1) angeordneten Sieb- und Filterelemente (32 bzw. 39) aus einer Siebwand (15) zum Aussieben von in der Flüssigkeit enthaltenen Feststoffen und aus zwischen der Siebwand (15) und der zweiten Trennwand (19) angeordneten Filterplatten (16,17,18) gebildet sind.

5. Vorrichtung nach Anspruch 3 oder 4, dadurch gekennzeichnet, daß die Prallwand (10), die Feststoffwand (11), die Siebwand (15) und die Filterplatten (16-18) gegenüber der Frontwand (1) in einem Winkel zwischen 0° und 45°, vorzugsweise im Winkel von 10°, geneigt angeordnet sind.

6. Vorrichtung nach einem der vorangehenden Ansprüche, dadurch gekennzeichnet, daß die zweite Trennwand (19) sich vertikal von der Zwischenbodenplatte (9) aus bis zur Behälteroberseite (4) hin erstreckt und kreisförmige Öffnungen (40) aufweist, die im wesentlichen unterhalb der Unterkante (35) des Flüssigkeitseinlasses (7) angeordnet sind und in strömungsmäßiger Verbindung mit den im Abschnitt (B2) angeordneten Filterelementen (21) stehen.

7. Vorrichtung nach Anspruch 6, dadurch gekennzeichnet, daß in den Öffnungen (40) Rohrstutzen (20) angeordnet sind, die sich in den Abschnitt (B2) hineinerstrecken und an denen sich in den Abschnitt (B2) hineinerstreckende, als Filterelemente (21) dienende Beutelfilter (41) befestigt sind, die von der Flüssigkeit von innen nach außen durchströmt werden.

8. Vorrichtung nach Anspruch 6 oder 7, dadurch gekennzeichnet, daß die Rohrstutzen (20) und die diesen zugeordneten Beutelfilter (41) in übereinanderliegenden Reihen derart angeordnet sind, daß der vertikale Abstand zweier benachbarter Reihen geringer ist als der Durchmesser der Rohrstutzen (20), so daß die Unterseite der jeweils höher gelegenen Reihe der Rohrstutzen (20) tiefer liegt als die Oberseite der jeweils darunter gelegenen Reihe der Rohrstutzen (20).

9. Vorrichtung nach Anspruch 8, dadurch gekennzeichnet, daß die Beutelfilter (41) zweier übereinander liegender Reihen durch gewellte Trennbleche (22) voneinander getrennt angeordnet sind, deren Länge in Längsrichtung des Behälters (3) gesehen mindestens der Länge der Beutelfilter (41) entspricht.

10. Vorrichtung nach einem der vorangehenden Ansprüche, dadurch gekennzeichnet, daß in der Zwischenbodenplatte (9) im Bereich der Rückwand (2) eine mit einem feinmaschigen Lochblech (27) bedeckte Durchtrittsöffnung (23) für die Flüssigkeit ausgebildet ist.

11. Vorrichtung nach einem der vorangehenden Ansprüche, dadurch gekennzeichnet, daß der gesamte, unter der Zwischenbodenplatte (9) gelegene Abschnitt (C) vom Filtermaterial (26) ausgefüllt ist.

12. Vorrichtung nach Anspruch 11, dadurch gekennzeichnet, daß das Filtermaterial (26) im Abschnitt (C) ein oberflächenaktives Material oder verschiedene, in Strömungsrichtung der Flüssigkeit gesehen nacheinander angeordnete, unterschiedliche oberflächenaktive Materialien (26) sind, die von der Flüssigkeit nacheinander durchströmt werden.

13. Vorrichtung nach Anspruch 11 oder 12, dadurch gekennzeichnet, daß im Abschnitt (C) sich von der Zwischenbodenplatte (9) aus nach unten in Richtung zum Behälterboden (3) hin erstreckende, in horizontaler Richtung im Abstand zueinander angeordnete Stegbleche (25), unter denen die Flüssigkeit hindurchströmt, und Entlüftungsrohre (24) vorgesehen sind, die sich von den Seitenwänden (31) her in den Innenraum des Abschnitts (C) erstrecken.

14. Vorrichtung nach einem der vorangehenden Ansprüche, dadurch gekennzeichnet, daß der Neigungswinkel der Zwischenbodenplatte (9) in Strömungsrichtung der Flüssigkeit gesehen in einem Winkel zwischen 0° und 30° geneigt einstellbar ist.

15. Vorrichtung nach einem der vorangehenden Ansprüche, dadurch gekennzeichnet, daß die Siebwand (15), die Plattenfilter (16,17,18), die erste und zweite Trennwand (13 bzw.19), die Prall-, Feststoff- und Schwimmstoffwand (10 bzw. 11 bzw. 12), die Trennbleche (22) und die Zwischenbodenplatte (9) sich von einer Seitenwand (31) zur anderen Seitenwand (31) des Behälters (30) erstrecken und durch an den Seitenwänden (31) angeordnete Montage-, Stütz- und Führungselemente derart gehalten sind, daß diese aus dem Behälter (30) herausnehmbar sind.

16. Vorrichtung nach einem der vorangehenden Ansprüche, dadurch gekennzeichnet, daß der Behälter (30) mit einem oder mehreren Behälterdeckeln (5) versehen ist, in denen Entlüftungsrohre (36,37,38) für die darunter liegenden Abschnitte (A,B1,B2) gebildet sind. (PA 45)

17. Vorrichtung nach einem der vorangehenden Ansprüche, dadurch gekennzeichnet, daß die Zufuhr der Flüssigkeit vom Abschnitt (A) zum Abschnitt (B1) über die erste Trennwand (13) hinweg und dann zum Abschnitt (B2) durch die Öffnungen (40) der vor dem Abschnitt (B2) vertikal zur Strömungsrichtung der Flüssigkeit angeordneten, zweiten Trennwand (19) hindurch erfolgt.

## Claims

1. Device for purifying liquids, in particular polluted water for fighting fires, comprising a tank (30) with a front wall (1), a rear wall (2), a tank bottom (3), two side walls (31), a liquid inlet (7) and a liquid outlet (8),
**characterized by**
- an intermediate bottom plate (9) extending within the tank (30) from the front wall (1) through to the rear wall (2),
- a first partition wall (13) extending from the intermediate bottom plate (9) in the direction of the upper tank side (4),
- a second partition wall (19) formed between the first partition wall (13) and the rear wall (2), extending from the intermediate bottom plate (9) through to the upper tank side (4),
- a section (A) limited by the first partition wall (13), the front wall (1), the two side walls (31) and the intermediate bottom plate (9), incorporating separating elements (14) for separating floating material and/or waste from the liquid.
- a section (B1) limited by the first partition wall (13), the second partition wall (19), the two side walls (31) and the intermediate bottom plate (9), incorporating sieve and filter elements (32 and 39, respectively) for fine-screening solid matter from the liquid.
- a section (B2) limited by the partition wall (19), the side walls (31), the intermediate bottom plate (9) and the rear wall (2), in which filter elements (21) are provided for super fine-screening solid matter from the liquid.
- a section (C) limited by the intermediate bottom plate (9), the tank bottom (4), the side walls (31) and the front and rear wall (1, 2), in which filter material (26) is provided for absorbing pollutants dissolved in the liquid.
- and a passageway opening (23) for the liquid, provided in the intermediate bottom plate (9) between the section (B2) and the section (C).
- whereby the liquid inlet (7) is connected flow-wise to section (A), and the liquid outlet (8) is connected flow-wise to section (C).

2. Device according to claim 1, characterized by, that the upper edge (33) of the first partition wall (13) is essentially on the same level as the lower edge (35) of the liquid inlet (7).

3. Device according to claims 1 or 2, characterized by, that the separating elements (14) arranged within section (A) are formed by a baffle plate (10) located opposite the liquid inlet and extending below the liquid level that adjusts in section (A) during operation of the device, a solids wall (11) for separating solids contained in the liquid and extending from the intermediate bottom plate (9) up to the level of the lower edge (35) of the liquid inlet (7), and a floating-materials wall (11) for separating floating materials contained within the liquid and extending from the upper tank side (4) in the direction of the tank bottom (3), whereby the floating-materials wall (11) arranged between the solids wall (11) and the first partition wall (13) extends to beneath the liquid surface that adjusts in the section (A) during operation of the device.

4. Device according to claims 1 or 2, characterized by, that the sieve and filter elements (32 and 39, respectively) arranged within section (B1) are formed by a sieve wall (15) for sifting out solid materials in the liquid and filter plates (16,17,18) arranged between the sieve wall (15) and the second partition wall (19).

5. Device according to claims 3 or 4, characterized by, that the baffle plate (10), the solids wall (11), the sieve wall (15) and the filter plates (16-18) are arranged at an angle between 0° and 45° to the front wall (1), preferably at an angle of 10°.

6. Device according to any of the above claims, characterized by, that the second partition wall (19) extends vertically from the intermediate bottom plate (9) to the upper tank side (4) and comprises circular openings (40) that are basically arranged beneath the lower edge of the liquid inlet (7) and are joined flow-wise to the filter elements (21) in section (B2).

7. Device according to claim 6, characterized by, that in the openings (40) there are arranged branch stubs (20) that extend into section (B2) and to which are affixed bag filters (41) serving as filter elements (21) through which the liquid flows from the inside to the outside.

8. Device according to claims 6 or 7, characterized by, that the branch stubs (20) and the bag filters (41) assigned to them are arranged in rows above each other in such a way that the vertical distance between two adjacent rows is less than the diameter of the branch stubs (20), so that the underside of the respective higher row of branch stubs (20) is positioned lower than the upper side of the respective lower row of branch stubs.

9. Device according to claim 8, characterized by, that the bag filters (41) of two rows located above each other are arranged separated from each other by corrugated baffle-plates (22) whose length, measured in the longitudinal direction of the tank (3), corresponds to at least the length of the bag filters.

10. Device according to any of the above claims, characterized by, that in the intermediate bottom plate (9), in the area of the rear wall (2), there is a passageway opening (23) for the liquid covered by a fine-meshed perforated plate (27) for the liquid.

11. Device according to any of the above claims, characterized by, that the entire section (C) under the intermediate bottom plate (9) is filled up with filter material (26).

12. Device according to claim 11, characterized by, that the filter material (26) in section (C) consists of a surface-active material or of various different surface-active materials successively arranged in the flow direction of the liquid, through which the liquid flows in succession.

13. Device according to claims 11 or 12, characterized by, that in section (C) there are provided rib plates (25), beneath which the liquid flows through, which are horizontally arranged and spaced with respect to each other and extend from the intermediate bottom plate (9) downwards in the direction of the tank bottom (3), and vent pipes (24), which extend from the side walls (31) into the inner space of section (C).

14. Device according to any of the above claims, characterized by, that the angle of inclination of the intermediate bottom plate (9), viewed in the direction of flow of the liquid, can be adjusted angularly within a range from 0° through 30°.

15. Device according to any of the above claims, characterized by, that the sieve wall (15), the filter plates (16,17,18), the first and second partition wall (13 and 19, respectively), the baffle plate (10), the solids wall (11) and the floating-materials wall (12), the baffle plates (22) and the intermediate bottom plate (9) extend from one side wall (31) to the other side wall (31) of the tank (30) and are held by fixing elements, supporting elements and guide elements arranged on the side walls of the tank (30) in such a way that they can be removed out of the tank.

16. Device according to any of the above claims, characterized by, that the tank (30) is provided with one or more tank covers (5) in which vent pipes (36,37,38) have been formed for the underlying sections (A,B1,B2). (PA 45)

17. Device according to any of the above claims, characterized by, that the liquid is fed in from section (A) to section (B1) via the first partition wall (13) and then to section (B2) via the openings (40) in the second partition wall (19) which is arranged before section (B2) and vertical to the flow direction of the liquid.

## Revendications

1. Dispositif pour purifier des liquides, notamment des eaux polluées pour extinction d'incendies, constitué d'un réservoir (30) étant pourvu d'une paroi frontale (1), d'une paroi arrière (2), d'un fond du réservoir (3), de deux parois latérales (31), d'un orifice d'entrée (7) et d'un orifice de sortie (8) pour le liquide,
**caractérisé par**
- une plaque de fond intermédiaire (9) qui s'étend à l'intérieur du réservoir (30) de la paroi frontale (1) jusqu'a la paroi arrière (2),
- une première paroi de séparation (13) qui s'étend de la plaque de fond intermédiaire (9) vers la face supérieure du réservoir (4),
- une deuxième paroi de séparation (19) placée entre la première paroi de séparation (13) et la paroi arrière (2) et qui s'élève de la plaque de fond intermédiaire (9) jusqu'à la face supérieure du réservoir (4),
- une section (A) limitée par la première paroi de séparation (13), la paroi frontale (1), les deux parois latérales (31) et la plaque de fond intermédiaire (9), contenant des éléments de séparation (14) pour déposer les matières surnageantes et/ou les matières grosses du liquide,
- une section (B1) limitée par la première paroi de séparation (13), la deuxième paroi de séparation (19), les deux parois latérales (31) et la plaque de fond intermédiaire (9), et étant agencée pour les éléments tamisés et filtrants (32 ou 39) en vue de séparer finement des matières solides contenues dans le liquide,
- une section (B2) limitée par la paroi de séparation (19), les parois latérales (31), la plaque de fond intermédiaire (9) et la paroi arrière (2), contenant des éléments filtrants (21) pour la séparation superfine des matières solides dans le liquide,
- une section (C) limitée par la plaque de fond intermédiaire (9), le fond du réservoir (4), les parois latérales (31) ainsi que la paroi frontale (1) et la paroi arrière (2), comportant des éléments filtrants (26) aménagés pour absorber les substances polluées dissouses dans le liquide,
- un orifice (23) dans la plaque de fond intermédiaire (9) entre la section (B2) et la section (C) pour le passage du liquide,
- ce qui fait que l'écoulement du liquide relie l'orifice d'entrée (7) avec la section (A) et l'orifice de sortie du liquide (8) avec celle de la section (C).

2. Dispositif selon la revendication 1, caractérisé en ce que le bord supérieur (33) de la première paroi de séparation (13) se trouve, en substance, au même niveau que le bord inférieur (35) de l'orifice d'entrée (7) pour le liquide.

3. Dispositif selon la revendication 1 ou 2, caractérisé en ce que les éléments de séparation (14) agencés dans la section (A) sont constitués par une tôle de chicane (10) située en face de l'orifice d'entrée (7), et s'étendant en aval du niveau du liquide qui se règle en cas de fonctionnement du dispositif. Sont constitués les éléments de séparation par la plaque de fond intermédiaire (9) jusqu'à la hauteur du bord inférieur (35) de l'orifice d'entrée (7) s'étendant jusqu'à la paroi de matières solides (11) pour isoler les matières solides contenues dans le liquide et par une paroi de matières surnageantes (12) s'allongeant de la face supérieure du réservoir (4) en direction du fond du réservoir (12). La paroi des matières surnageantes (12), placée entre la paroi des matières solides (11) et la première paroi de séparation (13), s'étend jusqu' au-dessous du niveau du liquide se réglant en cas de fonctionnement du dispositif dans la section (A).

4. Dispositif selon la revendication 1 ou 2, caractérisé en ce que les éléments tamisés et filtrants (32 et 39) dans la section (B1) se constituent d'une paroi à tamis (15) pour filtrer les matières solides contenues dans le liquide et des plaques filtrantes (16, 17, 18) constituées de la paroi à tamis (15) et de la deuxième paroi de séparation (19.

5. Dispositif selon la revendication 3 ou 4, caractérisé en ce que la tôle-chicane (10), la paroi de matières solides (11), la paroi à tamis (15) et les plaques filtrantes (16-18) sont inclinées à l'opposite de la paroi frontale (1) entre 0° et 45°, mais à un angle de 10° de préférence.

6. Dispositif selon une des revendications précédées, caractérisé en ce que la deuxième paroi de séparation (19) s'étend verticalement de la plaque de fond intermédiaire (9) jusqu'à la face supérieure du réservoir (4) et étant pourvue des orifices circulaires (40) agencés essentiellement au-dessous du bord inférieur (35) de l'orifice d'entrée du liquide (7) qui sont en corrélation du point de vue des écoulements avec les éléments filtrants (21) de la section (B2).

7. Dispositif selon la revendication 6, caractérisé en ce que les orifices (40) présentent des tubulures (20) qui s'allongent jusqu'à la section (B2) et à laquelle sont fixés des filtres à poche (41) servant d'éléments filtrants (21) où le liquide passe à travers de l'intérieur vers l'extérieur.

8. Dispositif selon la revendication 6 ou 7, caractérisé en ce que les tubulures (20) et les filtres à poche (41) y affectés sont disposés en rangées superposées de manière que la distance verticale de deux rangées voisines soit inférieure au diamètre des tubulures (20), si bien que la face inférieure de la rangée toujours supérieure des tubulures (20) reste inférieure à la face supérieure de la rangée toujours inférieure des tubulures (20).

9. Dispositif selon la revendication 8, caractérisé en ce que les filtres à poche (41) de deux rangées superposées sont isolés par des tôles de séparation ondulées (22), dont la longueur correspond au moins à celle des filtres à poche (41) en longueur du réservoir (3).

10. Dispositif selon une des revendications précédées, caractérisé en ce que un orifice de passage (23) pour le liquide est aménagé dans la plaque de fond intermédiaire (9) au niveau de la paroi arrière (2), ledit orifice est couvert d'une tôle perforée à mailles fines.

11. Dispositif selon une des revendications précédées, caractérisé en ce que toute la section (C) placée au-dessous de la plaque de fond intermédiaire (9) est remplie des éléments filtrants (26).

12. Dispositif selon la revendication 11, caractérisé en ce que la matière filtrante (26) dans la section (C) constitue une matière tensio-active ou bien composé d' autres matières différentes, agencées successivement dans le sens d'écoulement du liquide et différentes dans leur activité de surface (26).

13. Dispositif selon la revendication 11 ou 12, caractérisé en ce que dans la section (C) sont prévus des tôles de l'âme (25) séparées l'une de l'autre et s'étendant de la plaque de fond intermédiaire (9) vers le bas, en direction du fond du réservoir (3) au-dessous desquelles passent le liquide. Sont prévus également des tubes reniflards (24) s'allongeant des parois latérales (31) jusqu'à l'intérieur de la section (C).

14. Dispositif selon une des revendication précédées, caractérisé en ce que l'angle d'inclinaison du fond intermédiaire (9) est ajustable, dans le sens d'écoulement du liquide, à un angle de 0° et 30°.

15. Dispositif selon une des revendications précédées, caractérisé en ce que la paroi à tamis (15), les filtres à plaques (16,17,18), la première paroi de séparation (13) et la deuxième paroi de séparation (19), la paroi de chicane, la paroi de matières solides et la paroi de matières surnageantes (10,11,12), les tôles de séparation (22) et la plaque de fond intermédiaire (9) s'allongent d'une paroi latérale (31) à l'autre paroi latérale (31) du réservoir et sont fixés à l'aide d'éléments de montage, de support et de guidage sur les parois latérales (31) de manière qu'on puisse les enlever du réservoir (30).

16. Dispositif selon une des revendications précédées, caractérisé en ce que le réservoir (30) est pourvu d'une ou de plusieurs couvercles de réservoir (5) équipés des tubes reniflards (36,37,38) pour les sections sous-jacentes (A,B1,B2). (PA 45)

17. Dispositif selon une des revendications précédées, caractérisé en ce que l'alimentation de liquide s'effectue de la section (A) à la section (B1) en passant par la première paroi de séparation (13) pour arriver à la section (B2) par les orifices (40) de la deuxième paroi de séparation (19) agencée verticalement à la direction d'écoulement du liquide devant la section (B2).
